# FASCICULE DE BREVET EUROPEEN

(11) **EP 3 221 176 B1**
(45) Date de publication et mention de la délivrance du brevet: **01.01.2020**
(21) Numéro de dépôt: 15804904.9
(22) Date de dépôt: 19.11.2015
(51) Int. Cl.: B60K 37/06, H01H 13/70, H04L 12/40

(54) **DISPOSITIF ET SYSTÈME DE COMMANDE DE FONCTIONS DE VÉHICULE INDUSTRIEL OU TOUT TERRAIN**
VORRICHTUNG UND SYSTEM ZUR STEUERUNG DER FUNKTIONEN EINES INDUSTRIE- ODER GELÄNDEFAHRZEUG
DEVICE AND SYSTEM FOR CONTROLLING FUNCTIONS OF AN INDUSTRIAL OR ALL-TERRAIN VEHICLE

(30) Priorité: 19.11.2014 FR 1461191
(43) Date de publication de la demande: 27.09.2017
(73) Titulaire: MANITOU BF, 44150 Ancenis (FR)
(72) Inventeur: LEBRETON, Philippe, 44150 Ancenis (FR); DERVAL, Laurent, 44150 Ancenis (FR)
(74) Mandataire: Dutreix, Hugues Ours
(86) Numéro de dépôt international: PCT/FR2015/053137
(87) Numéro de publication internationale: WO 2016/079439

(56) Documents cités:
- EP-A1- 1 749 689
- WO-A1-2013/059200
- DE-A1- 4 209 284
- DE-A1- 19 953 863
- DE-U1-202005 011 033
- KR-A- 20110 076 533

## Description

### DOMAINE DE L'INVENTION

La présente invention concerne de manière générale la commande de fonctions de véhicule industriel ou tout terrain.

L'invention est relative à un système de commande de fonctions de véhicule industriel ou tout terrain comportant une pluralité de dispositifs de commande de fonctions de véhicule industriel ou tout terrain.

L'invention est particulièrement utile pour la commande de fonctions de chariot de manutention industriel ou tout terrain.

### ART ANTERIEUR

On connait de l'état de la technique des systèmes de commande de fonctions de véhicule industriel ou tout terrain comprenant des dispositifs de commande qui se présentent sous forme d'interrupteurs à bascule et donnent généralement satisfaction.

Cependant, ces interrupteurs à bascule nécessitent de disposer des connecteurs en attente sur les faisceaux électriques à des emplacements spécifiques en vue de leur raccordement éventuel.

Mais ces connecteurs sont parfois prédisposés inutilement sur les faisceaux électriques, si l'option correspondante n'est pas demandée ou utilisée par le client.

Le nombre et le coût de tels connecteurs inutiles vient compliquer la fabrication et renchérir le coût des moyens de commande de fonctions de véhicule industriel ou tout terrain.

En outre, ces interrupteurs à bascule relativement coûteux et de taille relativement importante doivent être disposés aux emplacements prévus par la conception initiale du véhicule industriel ou tout terrain, ce qui exclut toute interversion lors du montage.

On connait de l'état de la technique les documents DE 199 53 863 A1, EP1749689, WO2013059200 et DE202005011033 qui proposent des tableaux de commande. Cependant, ces tableaux de commande ne sont pas, ou sont difficilement, modulables et/ou ne sont pas suffisamment adaptables en fonction des options choisies par le client. En particulier, l'ajout ou l'interversion de fonctions serait compliqué et serait source d'erreurs.

La présente invention a pour but de proposer un système de commande permettant de palier à tout ou partie des problèmes exposés ci-dessus.

Un premier but de l'invention est de diminuer significativement les risques d'erreur de montage de dispositifs de commande de fonctions de véhicule industriel ou tout terrain, en prévoyant une rapidité de montage n'imposant ni ordre ni place.

Un deuxième but de l'invention est d'apporter une simplification du faisceau électrique de commande de fonctions de véhicule industriel ou tout terrain en diminuant le coût lié à la conception et au montage sans interversion du véhicule industriel ou tout terrain de l'art antérieur.

Un troisième but de l'invention est d'ajouter sans difficulté une option de dispositif de commande choisie par le client à un emplacement de la cabine défini par lui, pour lui apporter un confort d'utilisation accru et une meilleure ergonomie adaptée à son usage.

Un quatrième but de l'invention est de fournir un dispositif de commande compact en comparaison de la taille importante des boutons bascules classique, en modifiant également l'apparence générale de la cabine et en mettant en évidence le logo ou la marque du constructeur du véhicule industriel ou tout terrain.

Un cinquième but de l'invention est de perfectionner la commande de fonctions de véhicule industriel ou tout terrain, en fournissant un système ouvert et adaptable, tout en conservant tout ou partie des avantages des dispositifs de l'art antérieur.

### RESUME DE L'INVENTION

A cet effet, l'invention a pour objet un système de commande de fonctions de véhicule industriel ou tout terrain, système comportant :
- des moyens de traitement de données, tels qu'un calculateur,
- une pluralité de dispositifs de commande de fonctions de véhicule industriel ou tout terrain,
lesdits dispositifs de commande étant montés en réseau avec lesdits moyens de traitement de données selon un modèle maître-esclaves, chaque dispositif de commande de fonctions de véhicule industriel ou tout terrain, comportant en combinaison:
- au moins un premier organe de commande sensible au contact et des connecteurs,
- un circuit informatique avec au moins une unité de traitement de données, telle qu'un microcontrôleur, et une mémoire dans laquelle est mémorisée un identifiant unique associé audit dispositif de commande, et
- au moins un premier organe de visualisation d'état de commande, lesdits moyens de traitement de données étant configurés pour transmettre à chaque dispositif de commande identifié grâce à l'identifiant unique dudit dispositif de commande une requête pour obtenir un retour d'information de l'unité de traitement associée.

Le montage en réseau et l'interrogation par les moyens de traitement maitres des dispositifs de commande esclaves permet de ne pas être soumis à une disposition figée des dispositifs de commande à l'intérieur du véhicule. En effet, selon les préférences ou options choisies par l'utilisateur un dispositif de commande peut être remplacé par ou inversé avec un autre ou être ajouté, sans que cela perturbe le système de commande puisque les moyens de traitement communiquent avec chaque dispositif de commande à l'aide de son identifiant unique.

Selon un aspect particulier, l'unité de traitement de chaque dispositif de commande est apte à déterminer l'état de commande du ou des organes de commande du dispositif de commande correspondant et est apte à déterminer l'état du ou desdits organes de visualisation d'état de commande dudit dispositif de commande.

Selon une autre caractéristique particulière, lesdits moyens de traitement de données sont configurés pour transmettre ladite requête tour à tour à chaque dispositif de commande.

Selon une autre caractéristique particulière, lesdits moyens de traitement de données sont configurés pour transmettre ladite requête à chaque dispositif selon un cycle continu.

Selon l'invention, les dispositifs de commande sont remplaçables et/ou sont aptes à être intervertis les uns avec les autres. Les dispositifs sont ainsi physiquement interchangeables sans que cela affecte la communication entre le maître formé par les moyens de traitement et les esclaves formés par les dispositifs de commande, ou plus précisément les unités de traitement des dispositifs de commande.

Selon une autre caractéristique particulière, ledit système comprend des liens reliant entre eux les dispositifs de commande pour former un chainage de dispositif de commande, et reliant lesdits moyens de traitement de données audit chainage de dispositifs de commande.

Avantageusement, les liens entre les dispositifs et, de préférence aussi entre les moyens de traitement et le dispositif relié auxdits moyens de traitement, sont interchangeables de sorte que l'ordre des dispositifs peut être aisément modifié.

Selon une autre caractéristique particulière, ladite information en retour comprend l'état de commande dudit au moins un premier organe de commande sensible au contact et/ou la cohérence de l'état dudit au moins un premier organe de visualisation d'état de commande avec l'état de commande dudit au moins un premier organe de commande sensible au contact.

Selon une autre caractéristique particulière, ladite information en retour comprend l'état dudit au moins un premier organe de visualisation d'état de commande.

Selon d'autres caractéristiques particulières de l'invention :
- le circuit informatique de chaque dispositif de commande comporte sur un même support au moins ladite unité de traitement, les connecteurs, le premier organe de commande sensible au contact, un deuxième organe de commande sensible au contact, le premier organe de visualisation d'état de commande et un deuxième organe de visualisation d'état de commande.
- chaque dispositif de commande comporte une face avant avec un cadre rigide délimitant au moins une zone souple d'appui.
- chaque dispositif de commande comporte une première zone souple d'appui qui présente un pictogramme avec rétroéclairage et une fenêtre translucide superposée avec le premier organe de visualisation d'état de commande, pour permettre à l'opérateur de connaître l'état de commande de l'organe de commande sensible au contact.

L'invention permet ainsi une meilleure gestion des stocks d'éléments constitutifs de dispositif de commande de fonctions de véhicule industriel ou tout terrain, en choisissant de marquer les faces avant avec les pictogrammes en fonction des commandes effectives, puis d'assembler les faces avant correspondantes pour constituer les dispositifs de commande selon l'invention avant de les programmer avec leur identifiant unique.
- chaque dispositif de commande comporte en outre une deuxième zone souple d'appui qui présente un pictogramme avec rétroéclairage et une fenêtre translucide superposée avec un deuxième organe de visualisation d'état de commande, pour permettre à l'opérateur de connaître l'état de commande d'un deuxième organe de visualisation d'état de commande sensible au contact.
- chaque dispositif de commande comporte un boîtier de montage du circuit informatique et d'une face avant et le boîtier comporte des ouvertures de passage pour les connecteurs
- chaque dispositif de commande est fabriqué par montage du circuit informatique et d'une face avant dans un boîtier de montage et par assemblage étanche, par exemple par soudure ultrasons.
- l'unité de traitement de données de chaque dispositif de commande comportant au moins un circuit imprimé, lesdits liens relient lesdits circuits imprimés des dispositifs de commande chaque dispositif de commande, et présentent chacun des terminaisons comprenant des connecteurs enfichés avec des connecteurs des circuits imprimés des dispositifs de commande.

### BREVE DESCRIPTION DES DESSINS

L'invention sera mieux comprise grâce à la description qui va suivre donnée à titre d'exemple non limitatif en référence aux dessins annexés dans lesquels :
La figure 1 représente schématiquement des vues de face d'éléments constitutifs d'un dispositif de commande de fonctions de véhicule industriel ou tout terrain selon l'invention, avant assemblage.
La figure 2 représente schématiquement une vue en coupe d'un dispositif de commande de fonctions de véhicule industriel ou tout terrain selon l'invention, après assemblage.
La figure 3 représente schématiquement une architecture physique de système comportant un chaînage de dispositifs de commande de fonctions de véhicule industriel ou tout terrain selon la figure 1 ou la figure 2.

### DESCRIPTION DETAILLEE

Le concept de l'invention est décrit plus complètement ci-après avec référence aux dessins joints, sur lesquels des modes de réalisation du concept de l'invention sont montrés. Sur les dessins, la taille et les tailles relatives des éléments du système de commande peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier. L'étendue de l'invention est par conséquent définie par les revendications jointes. Les modes de réalisation qui suivent sont examinés, par souci de simplification, en relation avec la terminologie et la structure d'un système de commande de fonctions de véhicule.

Une référence dans toute la spécification à « un mode de réalisation » signifie qu'une fonctionnalité, une structure, ou une caractéristique particulière décrite en relation avec un mode de réalisation est inclue dans au moins un mode de réalisation de la présente invention. Ainsi, l'apparition de l'expression « dans un mode de réalisation » à divers emplacements dans toute la description ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

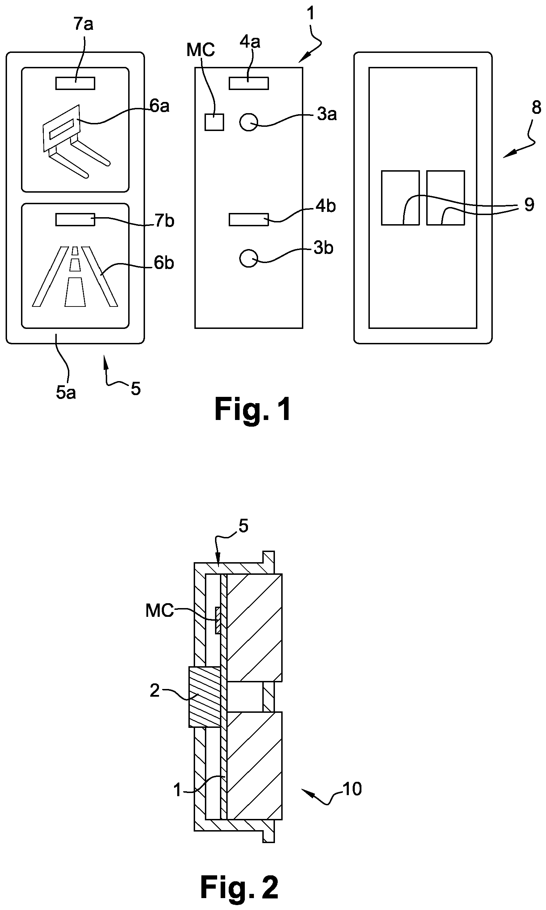

En référence aux figures 1 et 2, un circuit informatique 1 comporte sur un même support au moins une unité de traitement de données, telle qu'un microcontrôleur MC, des connecteurs 2, un premier organe 3a de commande sensible au contact, un deuxième organe 3b de commande sensible au contact, un premier organe 4a de visualisation d'état de commande et un deuxième organe 4b de visualisation d'état de commande. Ladite unité est une unité locale intégrée au dispositif de commande. Le circuit informatique 1 comporte aussi une mémoire qui peut être inclue dans l'unité de traitement.

Le premier organe 3a de commande sensible au contact et le deuxième organe 3b de commande sensible au contact sont de préférence deux touches sensibles au contact distinctes capables d'activer deux fonctions de commande différentes.

Chaque organe 3a de commande sensible au contact et chaque deuxième organe 3b de commande permet de remplacer un bouton interrupteur connu.

Le premier organe 4a de visualisation d'état de commande et le deuxième organe 4b de visualisation d'état de commande sont de préférence deux voyants d'activation assurant la visualisation de l'état de commande de l'organe 3a de commande sensible au contact et du deuxième organe 3b de commande sensible au contact, respectivement.

Une face avant 5 comporte un cadre rigide 5a délimitant deux zones souples d'appui.

Une première zone souple d'appui présente un pictogramme 6a avec rétroéclairage et une fenêtre translucide 7a superposée avec le premier organe 4a de visualisation d'état de commande, pour permettre à l'opérateur de connaître l'état de commande de l'organe 3a de commande sensible au contact.

Une deuxième zone souple d'appui présente un pictogramme 6b avec rétroéclairage et une fenêtre translucide 7b superposée avec le deuxième organe 4b de visualisation d'état de commande, pour permettre à l'opérateur de connaître l'état de commande du deuxième organe 4b de visualisation d'état de commande sensible au contact.

Un boîtier 8 de montage du circuit informatique 1 et de la face avant 5 comporte des ouvertures 9 de passage pour les connecteurs 2.

L'assemblage après montage du circuit informatique 1 et de la face avant 5 dans le boîtier 8 de montage est effectué de manière étanche, par exemple par soudure ultrasons, pour aboutir au dispositif 10 assemblé de la figure 2.

En choisissant des dimensions de dispositif identiques ou voisines de celles des interrupteurs à bascule de l'art antérieur, l'invention permet de doubler les possibilités de commande dans un même encombrement, du fait que l'espace correspondant à un interrupteur à bascule est utilisé pour deux zones d'appui distinctes.

Après réalisation de l'assemblage, une programmation unique et définitive du dispositif est effectuée en fonction des pictogrammes des faces avant 5.

Cette programmation unique et définitive du dispositif comporte au moins l'affectation d'un identifiant unique du dispositif et la mémorisation de cet identifiant unique du dispositif dans le microcontrôleur MC.

L'invention permet ainsi une meilleure gestion des stocks d'éléments constitutifs de dispositif de commande de fonctions de véhicule industriel ou tout terrain, en choisissant de marquer les faces avant 5 avec les pictogrammes en fonction des commandes effectives, puis d'assembler les faces avant 5 correspondantes pour constituer les dispositifs de commande selon l'invention avant de les programmer.

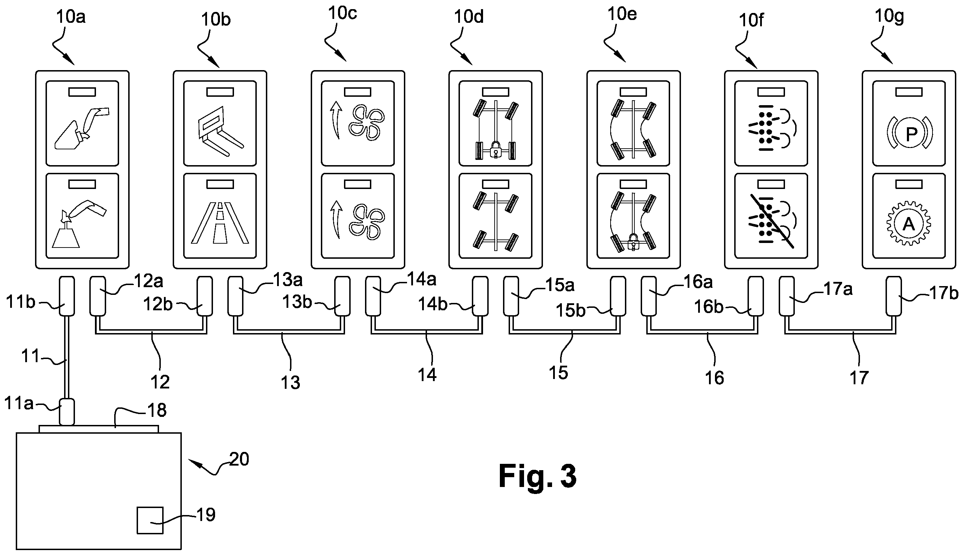

En référence à la figure 3, un système de commande de fonctions de véhicule industriel ou tout terrain comporte un chaînage de dispositifs de commande de fonctions de véhicule industriel ou tout terrain relié à une unité centrale de traitement 20 ou calculateur équivalent. L'unité centrale a en mémoire les identifiants uniques de la chaîne de dispositifs de commande avec laquelle l'unité centrale est configurée pour communiquer.

Dans cet exemple, l'unité centrale de traitement 20 est conformée en carte de circuit électronique utilisée pour la configuration d'un réseau chaîné.

Le réseau auquel sont connectés les dispositifs de commande 10a à 10g comporte un certain nombre de liens 11 à 17 symbolisés par des câbles.

Ce réseau est de préférence un réseau à intelligence répartie, tel qu'un réseau composé à partir de liens 11 à 17 reliant des circuits imprimés de dispositifs de commande 10a à 10g.

Les liens 11 à 17 reliant des circuits imprimés de dispositifs de commande 10a à 10g comportant chacun un microcontrôleur MC sont terminés respectivement par des connecteurs 11a, 11b ; 12a, 12b ; 13a, 13b ; 14a, 14b ; 15a, 15b ; 16a, 16b et 17a, 17b.

Les connecteurs 11b ; 12a, 12b ; 13a, 13b ; 14a, 14b ; 15a, 15b ; 16a, 16b et 17a, 17b sont enfichés avec des connecteurs 2 des circuits imprimés de dispositifs de commande 10a à 10g.

L'invention couvre également le cas où un réseau de ce genre est choisi dans un ensemble de réseaux filaires ou sans fil permettant divers types de liaison physique : paires torsadées, courant porteur, fréquence radio, infrarouge, câble coaxial, ou fibre optique.

Des liens de réseau situés après le dispositif de commande 10g peuvent être prévus ou ajoutés de manière supplétive pour la connexion d'autres dispositifs de commande.

L'avantage de ce type de réseau est d'utiliser un protocole de communication conforme au modèle OST à sept couches, connu des informaticiens.

Les moyens de liaison 11 à 17 peuvent être remplacés ou intervertis en fonction des spécifications de commande de fonctions ou des séquences particulières de commande de fonctions déterminées.

Une particularité de l'invention est de ne pas tenir compte de la localisation physique des dispositifs de commande 10a à 10g, mais d'être orientée entièrement vers la communication cyclique et la mémorisation temporaire des états de commande de fonctions de véhicule industriel ou tout terrain pour fournir une évaluation globale des fonctions du véhicule industriel ou tout terrain.

Cette approche permet de limiter le nombre d'interrogations de contrôle à effectuer.

Les dispositifs de commande 10a à 10g sont connectés en chaîne au calculateur 20 par branchement du connecteur 11a au terminal 18 du calculateur 20.

Comme le calculateur 20 est maitre de la chaîne de communication, le calculateur 20 interroge tour à tour chacun des dispositifs de commande 10a à 10g grâce à leur identifiant unique.

Le calculateur 20 émet un ordre d'interrogation à destination de chaque dispositif de commande 10a à 10g pour obtenir un retour d'information de chaque microcontrôleur MC correspondant.

Cette information en retour indique l'état d'activation des zones haute et basse des dispositifs de commande 10a à 10g et la cohérence des indications fournies par les deux voyants 4a, 4b d'activation assurant respectivement la visualisation de l'état de commande de l'organe 3a de commande sensible au contact et du deuxième organe 3b de commande sensible au contact.

Pour chaque dispositif 10a à 10g, le calculateur demande ainsi l'état des deux voyants d'activation assurant respectivement la visualisation de l'état de commande de l'organe 3a de commande sensible au contact et du deuxième organe 3b de commande sensible au contact.

Le calculateur répète ces opérations selon un cycle continu.

L'invention permet ainsi d'obtenir de façon univoque une information complète de l'état du véhicule et l'indication des performances et caractéristiques demandées par l'opérateur du véhicule industriel ou tout terrain.

L'invention décrite en référence à un système de commande de fonctions de véhicule industriel ou tout terrain n'est nullement limitée à ce mode de réalisation, mais s'étend également à tous types de systèmes de commande de fonctions équivalents.

La personnalisation et l'identification du système de commande de fonctions du véhicule a pour conséquence le fait que le véhicule peut être considéré dans son ensemble par le système comme un périphérique maître identifié simplement par une mémoire générale et un microprocesseur 19.

Cette mémoire générale et ce microprocesseur 19 peuvent être associés à une adresse de communication et une adresse de mémoire.

Le système fixé sur le véhicule peut être unique ou peut être doublé par sécurité sur un appareil portable, si le propriétaire du véhicule ou le chauffeur le désire.

Dans ce cas, chaque système de commande de fonctions reçoit de préférence les informations simultanément à la réception des informations par l'autre système, mais les ordres de commande ne peuvent cependant être donnés que par la commande de fonctions sur un seul système pour lequel l'émission et la réception sont pleinement autorisées pour la commande de fonctions, tandis que la réception est pleinement autorisée et l'émission est limitée par l'autre système.

Les fonctions et étapes décrites ci-dessus peuvent être mise en œuvre sous forme de programme informatique ou via des composants matériels (p. ex. des réseaux de portes programmables). En particulier, les fonctions et étapes opérées par les unités ou moyens de traitement peuvent être réalisées par des jeux d'instructions informatiques implémentées dans un processeur ou contrôleur ou être réalisées par des composants électroniques dédiés ou des composants de type FPGA ou ASIC. Il est aussi possible de combiner des parties informatiques et des parties électroniques.

Les programmes d'ordinateur, ou instructions informatiques, peuvent être contenus dans des dispositifs de stockage de programme, par exemple des supports de stockage de données numériques lisibles par ordinateur, ou des programmes exécutables. Les programmes ou instructions peuvent aussi être exécutés à partir de périphériques de stockage de programme.

L'invention n'est pas limitée aux modes de réalisation illustrés dans les dessins. En conséquence, il doit être entendu que, lorsque les caractéristiques mentionnées dans les revendications annexées sont suivies par des signes de référence, ces signes sont inclus uniquement dans le but d'améliorer l'intelligibilité des revendications et ne sont nullement limitatifs de la portée des revendications.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.

## Revendications

1. Système (10) de commande de fonctions de véhicule industriel ou tout terrain, comportant
- des moyens de traitement de données (20), tels qu'un calculateur,
- une pluralité de dispositifs (10a - 10g) de commande de fonctions de véhicule industriel ou tout terrain, lesdits dispositifs (10a - 10g) de commande étant montés en réseau avec lesdits moyens de traitement de données (20) selon un modèle maître-esclaves,
chaque dispositif (10a - 10g) de commande de fonctions de véhicule industriel ou tout terrain, comportant en combinaison:
- au moins un premier organe (3a) de commande sensible au contact et des connecteurs (2),
- un circuit informatique (1) avec au moins une unité de traitement de données, telle qu'un microcontrôleur (MC), et une mémoire dans laquelle est mémorisée un identifiant unique associé audit dispositif de commande (10a - 10g), et
- au moins un premier organe (4a) de visualisation d'état de commande, lesdits moyens de traitement de données (20) étant configurés pour transmettre à chaque dispositif de commande (10a - 10g) identifié grâce à l'identifiant unique dudit dispositif de commande une requête pour obtenir un retour d'information de l'unité de traitement associée,
**caracterisé en ce que** les dispositifs de commande (10a - 10g) sont remplaçables et/ou sont aptes à être intervertis les uns avec les autres.

2. Système (10) selon la revendication 1, **caractérisé en ce que** lesdits moyens de traitement de données (20) sont configurés pour transmettre ladite requête tour à tour à chaque dispositif de commande.

3. Système (10) selon la revendication 2, **caractérisé en ce que** lesdits moyens de traitement de données (20) sont configurés pour transmettre ladite requête à chaque dispositif selon un cycle continu.

4. Système (10) selon l'une quelconque des revendications précédentes, **caractérisé en ce que** ledit système comprend des liens (11 - 17) reliant entre eux les dispositifs (10a - 10g) de commande pour former un chaînage de dispositif de commande, et reliant lesdits moyens de traitement de données (20) audit chaînage de dispositifs de commande.

5. Système (10) selon l'une quelconque des revendications précédentes, **caractérisé en ce que** ladite information en retour comprend l'état de commande dudit au moins un premier organe (3a) de commande sensible au contact et/ou la cohérence de l'état dudit au moins un premier organe (4a) de visualisation d'état de commande avec l'état de commande dudit au moins un premier organe (3a) de commande sensible au contact.

6. Système (10) selon la revendication 5, **caractérisé en ce que** ladite information en retour comprend l'état dudit au moins un premier organe (4a) de visualisation d'état de commande.

7. Système (10) selon l'une quelconque des revendications précédentes, **caractérisé en ce que** le circuit informatique (1) de chaque dispositif de commande comporte sur un même support au moins ladite unité de traitement (MC), les connecteurs (2), le premier organe (3a) de commande sensible au contact, un deuxième organe (3b) de commande sensible au contact, le premier organe (4a) de visualisation d'état de commande et un deuxième organe (4b) de visualisation d'état de commande.

8. Système (10) selon l'une quelconque des revendications précédentes, **caractérisé en ce que** chaque dispositif de commande (10a - 10g) comporte une face avant (5) avec un cadre rigide (5a) délimitant au moins une zone souple d'appui.

9. Système (10) selon l'une quelconque des revendications précédentes, **caractérisé en ce que** chaque dispositif de commande (10a - 10g) comporte une première zone souple d'appui qui présente un pictogramme (6a) avec rétroéclairage et une fenêtre translucide (7a) superposée avec le premier organe (4a) de visualisation d'état de commande, pour permettre à l'opérateur de connaître l'état de commande de l'organe (3a) de commande sensible au contact.

10. Système (10) selon la revendication 9, **caractérisé en ce que** chaque dispositif de commande (10a - 10g) comporte en outre une deuxième zone souple d'appui qui présente un pictogramme (6b) avec rétroéclairage et une fenêtre translucide (7b) superposée avec un deuxième organe (4b) de visualisation d'état de commande, pour permettre à l'opérateur de connaître l'état de commande d'un deuxième organe (4b) de visualisation d'état de commande sensible au contact.

11. Système (10) selon l'une quelconque des revendications précédentes, **caractérisé en ce que** chaque dispositif de commande (10a - 10g) comporte un boîtier (8) de montage du circuit informatique (1) et d'une face avant (5) et **en ce que** le boîtier (8) comporte des ouvertures (9) de passage pour les connecteurs (2).

12. Système (10) selon l'une quelconque des revendications précédentes, **caractérisé en ce que** chaque dispositif de commande (10a - 10g) est fabriqué par montage du circuit informatique (1) et d'une face avant (5) dans un boîtier (8) de montage et par assemblage étanche, par exemple par soudure ultrasons.

13. Système(10) selon l'une quelconque des revendications précédentes, **caractérisé en ce que**, l'unité de traitement de données de chaque dispositif de commande (10a - 10g) comportant au moins un circuit imprimé, lesdits liens (11 - 17) relient lesdits circuits imprimés des dispositifs de commande (10a - 10g), et présentent chacun des terminaisons comprenant des connecteurs (11b ; 12a, 12b ; 13a, 13b ; 14a, 14b ; 15a, 15b ; 16a, 16b et 17a, 17b) enfichés avec des connecteurs (2) des circuits imprimés des dispositifs de commande (10a - 10g).

## Patentansprüche

1. System (10) zur Steuerung von Funktionen eines Industrie- oder Geländefahrzeugs, aufweisend:
- Datenverarbeitungsmittel (20) wie ein Rechner,
- eine Vielzahl von Steuervorrichtungen (10a-10g) von Funktionen eines Industrie- oder Geländefahrzeugs,
wobei die Steuervorrichtungen (10a-10g) im Netzwerk mit den Datenverarbeitungsmitteln (20) gemäß einem Master-Slave-Modell montiert sind,
wobei jede Steuervorrichtung (10a-10g) von Funktionen eines Industrie- oder Geländefahrzeugs in Kombination aufweist:
- mindestens ein erstes kontaktempfindliches Steuerorgan (3a) und Verbinder (2),
- eine IT-Schaltung (1) mit mindestens einer Datenverarbeitungseinheit wie ein Mikrocontroller (MC) und einem Speicher, in dem ein einziges Kennwort gespeichert ist, das der Steuervorrichtung (10a-10g) zugeordnet ist, und
- mindestens ein erstes Steuerzustands-Visualisierungsorgan (4a),
wobei die Datenverarbeitungsmittel (20) konfiguriert sind, um an jede dank des einzigen Kennworts der Steuervorrichtung identifizierte Steuervorrichtung (10a-10g) eine Anforderung zu übermitteln, um einen Informationsrücklauf von der zugeordneten Verarbeitungseinheit zu erhalten,
**dadurch gekennzeichnet, dass** die Steuervorrichtungen (10a-10g) ersetzbar sind und/oder imstande sind, untereinander umgestellt zu werden.

2. System (10) nach Anspruch 1, **dadurch gekennzeichnet, dass** die Datenverarbeitungsmittel (20) konfiguriert sind, um die Anforderung der Reihe nach an jede Steuervorrichtung zu übermitteln.

3. System (10) nach Anspruch 2, **dadurch gekennzeichnet, dass** die Datenverarbeitungsmittel (20) konfiguriert sind, um die Anforderung an jede Vorrichtung gemäß einem kontinuierlichen Zyklus zu übermitteln.

4. System (10) nach einem der vorangehenden Ansprüche, **dadurch gekennzeichnet, dass** das System Verbindungen (11-17) umfasst, die die Steuervorrichtungen (10a-10g) untereinander verbinden, um eine Steuervorrichtungsverkettung zu bilden, und die Datenverarbeitungsmittel (20) mit der Steuervorrichtungsverkettung verbinden.

5. System (10) nach einem der vorangehenden Ansprüche, **dadurch gekennzeichnet, dass** der Informationsrücklauf den Steuerzustand des mindestens einen ersten kontaktempfindlichen Steuerorgans (3a) und/oder die Kohärenz des Zustands des mindestens einen ersten Steuerzustands-Visualisierungsorgans (4a) mit dem Steuerzustand des mindestens einen ersten kontaktempfindlichen Steuerorgans (3a) umfasst.

6. System (10) nach Anspruch 5, **dadurch gekennzeichnet, dass** der Informationsrücklauf den Zustand des mindestens einen ersten Steuerzustands-Visualisierungsorgans (4a) umfasst.

7. System (10) nach einem der vorangehenden Ansprüche, **dadurch gekennzeichnet, dass** die IT-Schaltung (1) jeder Steuervorrichtung auf demselben Träger mindestens die Verarbeitungseinheit (MC), die Verbinder (2), das erste kontaktempfindliche Steuerorgan (3a), ein zweites kontaktempfindliches Steuerorgan (3b), das erste Steuerzustands-Visualisierungsorgan (4a) und ein zweites Steuerzustands-Visualisierungsorgan (4b) aufweist.

8. System (10) nach einem der vorangehenden Ansprüche, **dadurch gekennzeichnet, dass** jede Steuervorrichtung (10a-10g) eine Vorderseite (5) mit einem starren Rahmen (5a) aufweist, der mindestens eine elastische Druckzone begrenzt.

9. System (10) nach einem der vorangehenden Ansprüche, **dadurch gekennzeichnet, dass** jede Steuervorrichtung (10a-10g) eine erste elastische Druckzone aufweist, die ein Piktogramm (6a) mit Hintergrundbeleuchtung und ein durchscheinendes Fenster (7a) aufweist, übereinandergelagert mit dem erster Steuerzustands-Visualisierungsorgan (4a), um dem Bediener zu ermöglichen, den Steuerzustand des kontaktempfindlichen Steuerorgans (3a) zu ermitteln.

10. System (10) nach Anspruch 9, **dadurch gekennzeichnet, dass** jede Steuervorrichtung (10a-10g) ferner eine zweite elastische Druckzone aufweist, die ein Piktogramm (6b) mit Hintergrundbeleuchtung und ein durchscheinendes Fenster (7b) aufweist, übereinandergelagert mit einem zweiten Steuerzustands-Visualisierungsorgan (4b), um dem Bediener zu ermöglichen, den Steuerzustand eines zweiten kontaktempfindlichen Steuerzustands-Visualisierungsorgans (4b) zu ermitteln.

11. System (10) nach einem der vorangehenden Ansprüche, **dadurch gekennzeichnet, dass** jede Steuervorrichtung (10a-10g) einen Montagekasten (8) der IT-Schaltungen (1) und einer Vorderseite (5) aufweist und dass der Kasten (8) Durchgangsöffnungen (9) für die Verbinder (2) aufweist.

12. System (10) nach einem der vorangehenden Ansprüche, **dadurch gekennzeichnet, dass** jede Steuervorrichtung (10a-10g) durch Montage der IT-Schaltungen (1) und einer Vorderseite (5) in einem Montagekasten (8) und durch dichte Verbindung, beispielsweise durch Ultraschallschweißen, hergestellt ist.

13. System (10) nach einem der vorangehenden Ansprüche, **dadurch gekennzeichnet, dass**, wobei die Datenverarbeitungseinheit jeder Steuervorrichtung (10a-10g) mindestens eine gedruckte Schaltung aufweist, die Verbindungen (11-17) die gedruckten Schaltungen der Steuervorrichtungen (10a-10g) verbinden und jeweils Endungen aufweisen, welche Verbinder (11b; 12a, 12b; 13a, 13b; 14a, 14b; 15a, 15b; 16a, 16b und 17a, 17b) umfassen, die mit Verbindern (2) der gedruckten Schaltungen der Steuervorrichtungen (10a-10g) zusammengesteckt sind.

## Claims

1. A system (10) for controlling functions of an industrial or all-terrain vehicle, including:
- data processing means (20), such as a computer,
- a plurality of devices (10a - 10g) for controlling industrial or all-terrain vehicle functions, said control devices (10a - 10g) being mounted in a network with said data processing means (20) according to a master-slave model,
each device (10a - 10g) for controlling industrial or all-terrain vehicle functions including, in combination:
- at least a first contact-sensitive control member (3a) and connectors (2),
- a computer circuit (1) with at least one data processing unit, such as a microcontroller (MC), a memory in which a unique identifier is stored associated with said control device (10a - 10g), and
- at least one first control state viewing member (4a),
said data processing means (20) being configured to send each control device (10a - 10g) identified using the unique identifier of said control device a request in order to obtain feedback from the associated processing unit,
**characterized in that** the control devices (10a - 10g) are replaceable and/or are able to be inverted with one another.

2. The system (10) according to claim 1, **characterized in that** said data processing means (20) are configured to send said request to each control device in turn.

3. The system (10) according to claim 2, **characterized in that** said data processing means (20) are configured to send said request to each device according to a continuous cycle.

4. The system (10) according to any one of the preceding claims, **characterized in that** said system comprises links (11 - 17) connecting each of the control devices (10a - 10g) in order to form a chaining of control devices, and connecting said data processing means (20) to said chaining of control devices.

5. The system (10) according to any one of the preceding claims, **characterized in that** said feedback comprises the control state of said at least one first contact-sensitive control member (3a) and/or the coherence of the state of said at least one first member (4a) for viewing the control state with the control state of said at least one first contact-sensitive control member (3a).

6. The system (10) according to claim 5, **characterized in that** said feedback comprises the state of said at least one first member (4a) for viewing the control state.

7. The system (10) according to any one of the preceding claims, **characterized in that** the computer circuit (1) of each control device includes, on a same substrate, at least said processing unit (MC), the connectors (2), the first contact-sensitive control member (3a), a second contact-sensitive control member (3b), the first member (4a) for viewing the control state and a second member (4b) for viewing the control state.

8. The system (10) according to any one of the preceding claims, **characterized in that** each control device (10a - 10g) includes a front face (5) with a rigid frame (5a) delimiting at least one flexible bearing zone.

9. The system (10) according to any one of the preceding claims, **characterized in that** each control device (10a - 10g) includes a first flexible bearing zone that has an icon (6a) with backlighting and a translucent window (7a) superimposed with the first control state viewing member (4a), to allow the operator to determine the control state of the contact-sensitive control member (3a).

10. The system (10) according to claim 9, **characterized in that** each control device (10a - 10g) further includes a second flexible bearing zone that has an icon (6b) with backlighting and a translucent window (7b) superimposed with a second control state viewing member (4b), in order to allow the operator to determine the control state of a second contact-sensitive control state viewing member (4b).

11. The system (10) according to any one of the preceding claims, **characterized in that** each control device (10a - 10g) includes a housing (8) for assembling the computer circuit (1) and a front face (5) and **in that** the housing (8) includes passage openings (9) for the connectors (2).

12. The system (10) according to any one of the preceding claims, **characterized in that** each control device (10a - 10g) is manufactured by mounting the computer circuit (1) and a front face (5) in an assembly housing (8) and by tight assembly, for example by ultrasonic welding.

13. The system (10) according to any one of the preceding claims, **characterized in that**, the data processing unit of each control device (10a -1 0g) including at least one printed circuit, said links (11-17) connect said printed circuits of the control devices (10a - 10g), and each have terminations comprising connectors (11b; 12a, 12b; 13a, 13b; 14a, 14b; 15a, 15b; 16a, 16b and 17a, 17b) plugged in with connectors (2) of the printed circuits of the control devices (10a - 10g).
